# EUROPÄISCHE PATENTSCHRIFT

(11) **EP 3 158 127 B1**
(45) Veröffentlichungstag und Bekanntmachung des Hinweises auf die Patenterteilung: **15.09.2021**
(21) Anmeldenummer: 15727579.3
(22) Anmeldetag: 21.05.2015
(51) Int. Cl.: D07B 7/14, B65G 15/36, D07B 1/06

(54) **VERFAHREN ZUR HERSTELLUNG EINES ZUGTRÄGES, ZUGTRÄGER SOWIE DESSEN VERWENDUNG**
METHOD FOR PRODUCING A TENSION MEMBER, TENSION MEMBER AND USE THEREOF
PROCÉDÉ POUR PRODUIRE UNE CARCASSE, CARCASSE ET SON UTILISATION

(30) Priorität: 23.06.2014 DE 102014211929
(43) Veröffentlichungstag der Anmeldung: 26.04.2017
(73) Patentinhaber: ContiTech Transportbandsysteme GmbH, 30165 Hannover (DE)
(72) Erfinder: LOTZ, Florian, 37647 Brevörde (DE); DREIER, Marius, 37191 Katlenburg (DE); KOCH, Harald, GR-38222 Volos (GR); PAVLIDIS, Iordanis, GR-38221 Volos (GR)
(74) Vertreter: Continental Corporation
(86) Internationale Anmeldenummer: PCT/EP2015/061209
(87) Internationale Veröffentlichungsnummer: WO 2015/197273

(56) Entgegenhaltungen:
- WO-A2-2012/107042
- GB-A- 1 215 516
- JP-A- 2004 277 923
- US-A- 3 778 994
- US-A- 4 005 610
- US-A- 4 197 695
- US-A1- 2012 174 557
- None

## Beschreibung

Die Erfindung betrifft ein Verfahren zur Herstellung eines Zugträgers für Fördergurte, insbesondere eines Zugträgers welcher als Stahlseil ausgebildet ist.

Fördergurte besitzen eine tragseitige und eine laufseitige Deckplatte aus jeweils einem polymeren Werkstoff mit elastischen Eigenschaften sowie einen eingebetteten Zugträger in Form von in Fördergurtlängsrichtung parallel verlaufenden Seilen, welche im Wesentlichen aus Stahl aufgebaut sein können.

Die zugkraftübertragende Karkasse eines Fördergurtes besteht aus Textil- und / oder Stahlseileinlagen, die in der Regel von wenigstens einer Haftgummimischung umgeben sind. Die Karkassen sind allseitig von verschleißfesten Gummideckplatten und einem Gummikantenschutz umgeben. Zusätzlich können bei Bedarf noch diverse Durchschlagsschutzeinrichtungen vorhanden sein.

Fördergurte bei denen die Karkasse im Wesentlichen aus Stahlseilen besteht, werden als Stahlseilfördergurte bezeichnet. Stahlseilfördergurte ermöglichen hervorragende Transportleistungen auch bei harter Beanspruchung. Ihre robuste Konstruktion garantiert sowohl eine hohe Bruchkraft bei stärkster Förderleistung, als auch eine gute Beaufschlagungsfestigkeit. Sie sind in der Regel besonders abriebfest, verrottungs- und korrosionsbeständig, chemisch resistent und thermisch stabil, so dass eine lange Lebensdauer bei niedrigem Wartungsbedarf gewährleistet ist.

Im Stahlseilfördergurt sind die Stahlseile meist als Lage in einer Ebene zwischen den Deckplatten angeordnet. Die Stahlseile sind aus Gründen der Haftung und des Korrosionsschutzes häufig verzinkt, besitzen zumeist einen Durchmesser von 2,8 bis 16,0 mm und können aus ca. 40 bis zu 250 Einzeldrähten bestehen.

Zur Verbesserung der Haftung werden häufig zusätzlich noch Haftmischungen, auch als Haftgummimischungen bezeichnet, verwendet, die neben der Optimierung der Haftung als solche auch während des Vulkanisationsprozesses in die Stahlseile hineinfließen sollen um eine bessere Abdichtung zu ermöglichen. Das vollständige Durchdringen des gesamten Seils, die auch als Durchgummierung bezeichnet wird, ist essentiell für die Lebensdauer des Stahlseils und somit auch für den gesamten Fördergurt. Findet keine vollständige Durchgummierung statt, so verbleiben Hohlräume in der Seilkonstruktion offen, wodurch bspw. Flüssigkeiten wie Wasser, Öle, etc. im Seil wandern können und es zu fortschreitenden Oxidationsprozessen, insbesondere zu Korrosion, unter zunehmender Alterung und einem Frühausfall des gesamten Fördergurtes kommen kann. Die vollständige Durchdringung der gesamten Seilkonstruktion ist umso schwerer, je größer der Seildurchmesser ist. Bei geschlossenen Seilkonstruktionen, welche auch als parallelschlag- oder gleichschlag-Konstruktion bezeichnet werden, ist sie auch bei geringeren Durchmessern kaum zu erreichen.

Zur Beschichtung, insbesondere von Stahlseilen, sind verschiedene Lösungsansätze bekannt. Zum einen lässt sich bspw. ein Überzug auf die Seile aufbringen, siehe u.a. DE 44 38 420 A1, DE 690 29 389 T2 oder DE 79 36 995 Ul. Dies führt allerdings zu den bereits oben erwähnten Nachteilen. In DE 694 21 090 T2 wird beispielsweise die Herstellung einer offenen Stahlcordkonstruktion beschrieben, bei dem die Herstellung in einem aufwendigen Verfahren gezielt unter Bildung von zusätzlichen Mikrolücken erfolgt, in die bei einer späteren Gummierung die Gummierungsmasse eindringen kann. Aus der US 4,197,695 ist ein Verfahren zur Herstellung eines Zugträgers bekannt, wobei der Zugträger aus wenigstens einem Seil aufgebaut ist, welches aus mehreren Litzen besteht, mit wenigstens folgende Verfahrensschritte:
- Einführen der einzelnen Drähte einer Litze in den Verlitzkopf einer Verlitzmaschine und
- in einem nachfolgenden Verfahrensschritt teilweise oder vollständiges Aufbringen wenigstens eines Beschichtungsmittels auf wenigstens 50 % der einzelnen Drähte der Litze vor dem Verdrillen der einzelnen Drähte zu einer Litze oder zeitgleich mit dem Verdrillen der einzelnen Drähte zu einer Litze, wobei das Beschichtungsmittel auf Basis eines Elastomers aufgebaut ist und wobei chemische Treibmittel und / oder Mikrokugeln in das Beschichtungsmittel eingemischt sind,
- Verdrillen der einzelnen Drähte zu einer Litze, und
- Schlagen eines Seils aus mehreren Litzen.

Die Aufgabe der Erfindung besteht daher darin, ein Verfahren zur Herstellung eines Zugträgers eines Fördergurtes bereitzustellen, welches eine vollständige Durchgummierung des Seils gewährleistet, so dass die Anzahl von offenen Hohlräumen deutlich reduziert wird und somit ein Transport bzw. eine Wanderung von Flüssigkeiten in die Seilkonstruktion und vor allem innerhalb der Seilkonstruktion verhindert werden kann.

Gelöst wird diese Aufgabe dadurch, dass das Verfahren wenigstens die Verfahrensschritte des Anspruchs 1 enthält.

Das Beschichten des gesamten Zugträgers erfolgt in der Regel in einem Tauchbad. Bisher wurde üblicherweise der gesamte Zugträger bzw. das hergestellte Seil einfach in das Tauchbad eingetaucht und wieder herausgezogen. Dadurch wurde aber lediglich, wie bereits eingangs erwähnt, ein Überzug auf den Zugträger ausgebildet. Im Vergleich zu der bereits oben erwähnten Beschichtung des bereits fertig vorliegenden Seils und / oder Zugträgers, wurde überraschend herausgefunden, dass eine vollständige Durchgummierung des Seils und somit auch des Zugträgers erfolgt, wenn bereits bei der Herstellung der einzelnen Litzen des Seils, die einzelnen Drähte aus denen die Litze aufgebaut ist, mit einer Beschichtung versehen werden.

Dies kann überraschend einfach und kostengünstig geschehen, bevor in einer Verlitzmaschine die Drähte verdrillt werden.

Insbesondere bei geschlossenen Seilkonstruktionen war ein vollständiges Durchdringen bisher schwierig und bei bestimmten Seilkonstruktionen gar nicht möglich.

Der Zugträger für den Fördergurt ist aus wenigstens einem Seil, welches in der Regel aus mehreren Litzen besteht, welche wiederum aus einzelnen Drähten bestehen, aufgebaut. Die Seile können als Litzenseil oder als Spiralseil gemäß DIN EN 12385-2:2002+A1:2008 vorliegen. Es kann sich um Gleichschlagseile oder um Kreuzschlagseile handeln.

Die Litze kann bevorzugt als Rundlitze, einlagige Litze, Seale, Warrington, Filler, kombinierter Parallelschlag oder verdichtete Litze gemäß DIN EN 12385-2:2002+A1:2008 ausgebildet sein.

Die gängigsten Konstruktionen des Seils sind 7x7, mit einem Seil aus 7 Litzen, die je aus 7 Drähten bestehen, 1×19+7×7, mit einer Kernlitze aus 19 Einzeldrähten und äußeren Litzen aus je 7 Drähten, und 7×19, mit einem Seil aus 7 Litzen, wobei jede Litze aus 19 Drähten besteht.

Die Herstellung der Litzen für den Zugträger erfolgt mittels einer Verlitzmaschine, auch als Verlitzvorrichtung bezeichnet. Es können sowohl Einfach- als auch Doppelschlagverlitzmaschinen eingesetzt werden.

Erfindungsgemäß werden zunächst die einzelnen Drähte der herzustellenden Litze in den Verlitzkopf der Verlitzmaschine in einem ersten Verfahrensschritt eingeführt. Von dort werden sie zu der Verdrilleinheit der Verlitzmaschine geführt. In einer ersten Variante wird vor dem eigentlichen Verdrillen der einzelnen Drähte zu einer Litze in einem weiteren, nachfolgenden Verfahrensschritt wenigstens ein Beschichtungsmittel jeweils teilweise oder vollständig auf wenigstens 50 %, d.h. auf wenigstens die Hälfte der Anzahl, der einzelnen Drähte aufgebracht. In einer zweiten Variante wird während dem eigentlichen Verdrillen der einzelnen Drähte zu einer Litze in einem zeitgleichen, aber separat zu betrachtenden Verfahrensschritt wenigstens ein Beschichtungsmittel jeweils teilweise oder vollständig auf wenigstens 50 % der einzelnen Drähte aufgebracht. Bevorzugt wird das Beschichtungsmittel jeweils vollständig auf wenigstens 50 %, d.h. auf wenigstens die Hälfte, der Gesamtmenge an einzelnen Drähten aufgebracht.

Besonders bevorzugt werden 80 %, ganz besonders bevorzugt alle einzelnen Drähte, d.h. 100 % der einzelnen Drähte, jeweils teilweise oder vollständig beschichtet. Im Idealfall werden somit 100 % der einzelnen Drähte, d.h. alle einzelnen Drähte, vollständig mit einem Beschichtungsmittel versehen.

Das Aufbringen des Beschichtungsmittels kann mit allen bekannten Möglichkeiten erfolgen. Es kann durch Aufstreichen, Einpinseln, Einspritzen mittels einer Spritze bzw. einer Spritzvorrichtung oder auch durch Einsprühen. bspw. durch eine Sprühvorrichtung, erfolgen. Dies kann manuell oder mechanisch durch eine entsprechende Vorrichtung erfolgen. So kann zum Beispiel das Einspritzen durch eine einfache seitliche Bohrung in der Verdrilleinheit erfolgen.

Im industriellen Maßstab hat sich das Aufspritzen und / oder das Aufsprühen als am einfachsten und kostengünstigsten erwiesen.

Die Menge an Beschichtungsmittel ist so zu wählen, dass entweder sofort oder aber spätestens nach dem letzten Prozessschritt, z.B. der Vulkanisation des Fertigprodukts (z.B. des Transportbands), eine vollständige Durchgummierung gewährleistet ist, so dass die Anzahl der Hohlräume deutlich reduziert wird.

Hierfür sind besonders gut das Aufspritzen als auch das Aufsprühen geeignet, da sie ein besonders gutes gleichmäßiges Aufbringen des Beschichtungsmittels bedingen, bei der sich auch die Dicke der Beschichtung auf dem einzelnen Draht gut einstellen lässt.

Die derart mit einem Beschichtungsmittel versehenen Drähte werden zu einer Litze verdrillt und in einem weiteren Prozessschritt zu einem Seil geschlagen.

Bevorzugt wird insbesondere die Herzlitze des Seils aus den mit dem Beschichtungsmittel versehenen Drähten hergestellt.

Die Anzahl der einzelnen Drähte für die Litze und die Anzahl der Litzen für das Seil hängen dabei von der gewünschten Konstruktion des Zugträgers ab.

Je nach Konstruktion besteht die Möglichkeit das fertige Seil nochmals von außen zu beschichten, oder auch während des Verseilprozesses das Gesamt-Seil mit der Beschichtungsmasse zu versehen, um noch vorhandene Hohlräume zwischen den Litzen zu reduzieren.

Bevorzugt handelt es sich bei dem Seil um ein Stahlseil oder um ein Stahl-Hybrid-Seil, bei dem wenigstens 20 Vol.-% des Seils aus Stahl bestehen.

Somit bestehen bevorzugt die einzelnen Drähte der Litze aus Stahl oder aus einem Stahl-Hybrid-Material, z. B. einer Legierung oder ähnliches. Oder aber die Litze kann aus einzelnen Drähten bestehend aus Stahl und einzelnen Drähten bestehend aus einem zweiten Material, welches nicht Stahl ist, bestehen.

Der nach dem erfindungsgemäßen Verfahren beschichtete Zugträger wird für die Herstellung von Fördergurten oder Transportbändern verwendet. Inder Literatur wird häufig zwischen Fördergurten und Transportbändern unterschieden. Fördergurte werden in der Regel für Schüttgut (wie bspw. Kohle, Erze, Sand, Zement usw.) eingesetzt, während Transportbänder üblicherweise für Stückgut (Pakete usw.) benutzt werden. Fördergurte sind im Allgemeinen länger, breiter, dicker und stärker als Transportbänder. Im allgemeinen Sprachgebrauch vermischen sich allerdings die beiden Begrifflichkeiten oft. Die vorliegende Erfindung ist somit sowohl für Fördergurte als auch für Transportbänder geeignet, bei denen jeweils Seile zum Einsatz gelangen, die im Wesentlichen aus Stahl aufgebaut sind.

Das verwendete Beschichtungsmittel bzw. die verwendete Beschichtungsmasse wird in Abhängigkeit vom Material des Zugträgers und dessen Konstruktion ausgewählt. Das Beschichtungsmittel ist auf der Basis wenigstens eines Elastomers aufgebaut. Bei dem Elastomer handelt es sich um einen Kautschuk, der ausgewählt ist aus der Gruppe, bestehend aus Naturkautschuk (NR) und / oder Butadien-Kautschuk (BR) und / oder Styrol-Butadien-Kautschuk (SBR) Besonders gut geeignet sind als Beschichtungsmittel Mischungen auf der Basis von SBR und / oder NR und / oder BR. Das Beschichtungsmittel enthält in einer bevorzugten Ausführungsform noch wenigstens einen Weichmacher und / oder wenigstens ein Lösungsmittel, über die in der Regel die Viskosität und / oder die Haftung bzw. die Klebrigkeit der Beschichtungsmasse eingestellt werden kann. Es ist aber auch möglich, dass das Beschichtungsmittel frei von Weichmachern und / oder Lösungsmitteln ist.

Ein weiterer Vorteil des erfindungsgemäßen Verfahrens liegt darin, dass auch Beschichtungsmittel mit höheren Viskositäten eingesetzt werden können. Dies führt zu einer Reduzierung von Weichmachern und / oder Lösungsmitteln. Durch die Beschichtung der einzelnen Drähte vor dem Verdrillen zu einer Litze ist eine vollständige Durchgummierung des Seils gewährleistet.

Das Beschichtungsmittel weist nach der Vulkanisation des Fördergurtes eine Porenstruktur auf. Diese Porenstruktur erfolgt durch den Einsatz von chemischen Treibmitteln und / oder Mikrokugeln, die in die Beschichtung eingemischt sind. Als Treibmittel können sowohl anorganische sowie organische Verbindungen eingesetzt werden. Es handelt sich hierbei üblicherweise um porenbildende Treibgase wie z.B. Azo- und DiazoVerbindungen, die unter dem Einfluß von Wärme oder Katalysatoren Gase (z.B. N2 oder CO2) abspalten und somit die Porenbildung ermöglichen. Die Treibmittel zersetzen sich hierbei bei einer bestimmten Temperatur während der Verarbeitung unter Gas-Bildung oder bei Zusatz von flüchtigen Lösemitteln während der Polymerisation bzw. Vulkanisation. Bei den Mikrokugeln handelt es sich um hohle Kugeln (Mikrosphären) mit einem Durchmesser im µm-Bereich aus Glas, Phenolharz, Kohlenstoff oder thermoplastischem Kunststoffmaterial. Die Mikrokugeln sind in bereits expandierter Form aber auch in expandierbarer Form auf dem Markt erhältlich. Um eine Volumenzunahme der Beschichtung erzielen zu können, welche zu einer Optimierung der Durchgummierung führt, werden bevorzugt expandierbare Mikrokugeln verwendet, die mit einem Treibmittel gefüllt sind und sich beim Erwärmen ausdehnen. Derartige Mikrokugeln werden z. B. unter dem Namen Expancel^{®} von der Firma Akzo Nobel vertrieben.

Eine Kombination von expandierten und expandierbaren Mikrokugeln ist möglich.

Anhand von einer Figur soll die Erfindung näher erläutert werden, ohne dabei auf diese beschränkt zu sein.

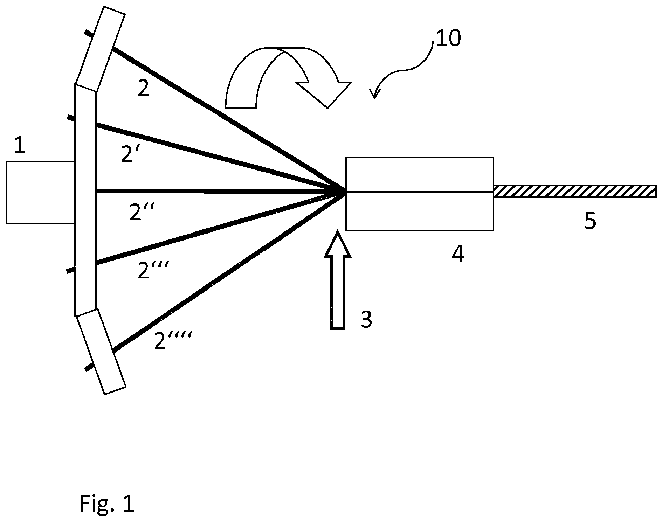

Fig. 1 zeigt das erfindungsgemäße Verfahren anhand einer schematischen Darstellung.

Die einzelnen Drähte 2, 2', 2", 2"', 2 "" werden in den Verlitzkopf 1 der Verlitzmaschine 10 eingeführt. Vor oder während des Verdrillens der einzelnen Drähte 2, 2', 2", 2"', 2"" in der Verdrilleinheit 4 wird wenigstens ein Beschichtungsmittel mittels einer Spritze oder einer Einspritzvorrichtung 3 aufgebracht. Nach dem Verdrillen der einzelnen Drähte 2, 2', 2", 2"', 2"" in der Verdrilleinheit 4 ergibt sich eine Litze 5.

### Bezugszeichenliste (Teil der Beschreibung)

- 10: Verlitzmaschine
- 1: Verlitzkopf
- 2, 2', 2", 2"', 2"": einzelne Drähte
- 3: Spritze oder Sprühvorrichtung
- 4: Verdrilleinheit
- 5: Litze

## Patentansprüche

1. Verfahren zur Herstellung eines Zugträgers eines Fördergurtes oder Transportbandes, wobei der Zugträger aus wenigstens einem Seil aufgebaut ist, welches aus mehreren Litzen besteht, beinhaltend wenigstens folgende Verfahrensschritte:
- Einführen einzelner Drähte (2, 2', 2'', 2''', 2'''') einer ersten Litze (5) in einen Verlitzkopf (1) einer Verlitzmaschine (10) und
- in einem nachfolgenden Verfahrensschritt teilweise oder vollständiges Aufbringen wenigstens eines Beschichtungsmittels auf wenigstens 50 % der einzelnen Drähte (2, 2', 2'', 2''' , 2'''') der ersten Litze (5) vor dem Verdrillen der einzelnen Drähte (2, 2', 2'', 2''', 2'''') zu der ersten Litze (5) oder zeitgleich mit dem Verdrillen der einzelnen Drähte (2, 2', 2'', 2''', 2'''') zu der ersten Litze (5), wobei das Beschichtungsmittel auf Basis eines Elastomers aufgebaut ist und wobei chemische Treibmittel und / oder Mikrokugeln in das Beschichtungsmittel eingemischt sind und wobei das Elastomer ein Kautschuk ist und wobei der Kautschuk ausgewählt ist aus der Gruppe bestehend aus Styrol-Butadien-Kautschuk (SBR) und / oder Butadienkautschuk (BR) und / oder Naturkautschuk (NR) und
- Verdrillen der einzelnen Drähte (2, 2', 2'', 2''', 2'''') zu der ersten Litze (5), und
- Schlagen des Seils aus mehreren Litzen, wobei wenigstens eine der Litzen die erste Litze (5) ist.

2. Verfahren nach Anspruch 1, **dadurch gekennzeichnet, dass** das Beschichtungsmittel auf wenigstens 80 % der einzelnen Drähte (2, 2', 2'', 2''', 2'''') der ersten Litze (5) teilweise oder vollständig aufgebracht wird.

3. Verfahren nach Anspruch 1 oder 2, **dadurch gekennzeichnet, dass** das Aufbringen des Beschichtungsmittels vollständig erfolgt.

4. Verfahren nach einem der Ansprüche 1 bis 3, **dadurch gekennzeichnet, dass** das Aufbringen des Beschichtungsmittels durch eine Spritze und / oder durch eine Sprühvorrichtung (3) erfolgt.

5. Verfahren nach einem der Ansprüche 1 bis 4, **dadurch gekennzeichnet, dass** das Beschichtungsmittel besagte Mikrokugeln enthält, wobei die Mikrokugeln expandierte und / oder expandierbare Mikrokugeln sind.

6. Verfahren nach einem der Ansprüche 1 bis 5, **dadurch gekennzeichnet, dass** die erste Litze (5) die Innenlitze, d.h. die Herzlitze, des Seils bildet.

7. Verfahren nach einem der Ansprüche 1 bis 6, **dadurch gekennzeichnet, dass** das Seil ein Stahlseil oder ein Stahl-Hybrid-Seil ist.

## Claims

1. Method for producing a tension member of a conveyor belt or a transport belt, wherein the tension member is constructed from at least one cable which is composed of a plurality of strands, said method comprising at least the following method steps:
- introducing individual wires (2, 2′, 2′′, 2′′′, 2′′′′) of a first strand (5) into a stranding head (1) of a stranding machine (10); and
- in a subsequent method step, applying at least one coating agent partially or completely to at least 50% of the individual wires (2, 2′, 2′′, 2′′′, 2′′′′) of the first strand (5) prior to twisting the individual wires (2, 2′, 2′′, 2′′′, 2′′′′) to form the first strand (5), or simultaneously with twisting the individual wires (2, 2′, 2′′, 2′′′, 2′′′′) to form the first strand (5), wherein the coating agent is based on an elastomer, and wherein chemical propellants and/or microspheres are mixed into the coating agent, and wherein the elastomer is a rubber, and wherein the rubber is selected from the group comprising styrene-butadiene rubber (SBR) and/or butadiene rubber (BR) and/or natural rubber (NR); and
- twisting the individual wires (2, 2′, 2′′, 2′′′, 2′′′′) to form the first strand (5); and
- making the cable from a plurality of strands, wherein at least one of the strands is the first strand (5).

2. Method according to Claim 1, **characterized in that** the coating agent is applied partially or completely to at least 80% of the individual wires (2, 2′, 2′′, 2′′′, 2′′′′) of the first strand (5).

3. Method according to Claim 1 or 2, **characterized in that** the application of the coating agent is performed in a complete manner.

4. Method according to one of Claims 1 to 3, **characterized in that** the application of the coating agent is performed by way of an injector and/or by a spray device (3).

5. Method according to one of Claims 1 to 4, **characterized in that** the coating agent contains said microspheres, wherein the microspheres are expanded and/or expandable microspheres.

6. Method according to one of Claims 1 to 5, **characterized in that** the first strand (5) forms the inner strand, that is to say the core strand, of the cable.

7. Method according to one of Claims 1 to 6, **characterized in that** the cable is a steel cable or a steel-hybrid cable.

## Revendications

1. Procédé de fabrication d'un élément tendeur d'une courroie de convoyeur ou d'une bande transporteuse, l'élément tendeur étant formé d'au moins un câble qui comprend plusieurs torons, ledit procédé comprenant au moins les étapes suivantes :
- introduire des fils individuels (2, ′, 2′′, 2′′′, 2′′′′) d'un premier toron (5) dans une tête de toronnage (1) d'une toronneuse (10) et
- dans une étape de procédé suivante, appliquer partiellement ou totalement au moins un agent de revêtement sur au moins 50 % des fils individuels (2, 2′, 2′′, 2′′′, 2′′′′) du premier toron (5) avant de torsader les fils individuels (2, 2′, 2′′, 2′′′, 2′′′′) pour obtenir le premier toron (5) ou tout en torsadant les fils individuels (2, ′, 2′′, 2′′′, 2′′′′) pour obtenir le premier toron (5), l'agent de revêtement étant à base d'un élastomère et des agents d'expansion chimiques et/ou des microsphères étant mélangés à l'agent de revêtement et l'élastomère étant un caoutchouc et le caoutchouc étant choisi dans le groupe comprenant du caoutchouc styrène-butadiène (SBR) et/ou du caoutchouc butadiène (BR) et/ou du caoutchouc naturel (NR) et
- torsader les fils individuels (2, 2′, 2′′, 2′′′, 2′′′′) pour former le premier toron (5), et
- placer le câble comprenant plusieurs torons, au moins un des torons étant le premier toron (5).

2. Procédé selon la revendication 1, **caractérisé en ce que** l'agent de revêtement est appliqué partiellement ou totalement sur au moins 80 % des fils individuels (2, 2′, 2′′, 2′′′, 2′′′′) du premier toron (5).

3. Procédé selon la revendication 1 ou 2, **caractérisé en ce que** l'application de l'agent de revêtement s'effectue intégralement.

4. Procédé selon l'une des revendications 1 à 3, **caractérisé en ce que** l'application de l'agent de revêtement est effectuée par une seringue et/ou par un dispositif de pulvérisation (3).

5. Procédé selon l'une des revendications 1 à 4, **caractérisé en ce que** l'agent de revêtement contient lesdites microsphères, les microsphères étant des microsphères expansées et/ou expansibles.

6. Procédé selon l'une des revendications 1 à 5, **caractérisé en ce que** le premier toron (5) forme le toron intérieur, c'est-à-dire le toron de coeur, du câble.

7. Procédé selon l'une des revendications 1 à 6, **caractérisé en ce que** le câble est un câble en acier ou un câble hybride en acier.
